# FASCICULE DE BREVET EUROPEEN

(11) **EP 1 082 596 B1**
(45) Date de publication et mention de la délivrance du brevet: **09.01.2002**
(21) Numéro de dépôt: 99920925.7
(22) Date de dépôt: 26.05.1999
(51) Int. Cl.: G01N 3/04, G01N 19/04

(54) **OUTILLAGE DE MONTAGE SUR UNE MACHINE DE TEST DE TRACTION DE DEUX ELEMENTS COLLES L'UN A L'AUTRE**
ZUGFESTIGKEITSPRÜFMASCHINENHALTERUNG FÜR ZWEI ANEINANDER GEKLEBTE ELEMENTE
EQUIPMENT FOR MOUNTING ON A TENSION TESTING MACHINE TWO ELEMENTS BONDED TO EACH OTHER

(30) Priorité: 28.05.1998 FR 9806718
(43) Date de publication de la demande: 14.03.2001
(73) Titulaire: CENTRE NATIONAL D'ETUDES SPATIALES, F-75039 Paris Cedex 01 (FR)
(72) Inventeur: COURTADE, Frédéric, F-31320 Castanet Tolosan (FR)
(74) Mandataire: Cabinet BARRE LAFORGUE & associés
(86) Numéro de dépôt international: FR9901233
(87) Numéro de publication internationale: WO9961884

(56) Documents cités:
- DE-A- 3 723 475
- GB-A- 620 183
- US-A- 5 313 841
- US-A- 5 337 614

## Description

L'invention concerne un outillage de montage, sur une machine de test de traction à deux organes de traction s'écartant l'un de l'autre selon un axe de traction, de deux éléments collés l'un à l'autre selon un plan de collage tel qu'un substrat en matériau semi-conducteur (par exemple une puce de circuit intégré) collé sur une embase (par exemple une plaque de boîtier de circuit intégré), chacun de ces éléments présentant une face libre parallèle au plan de collage.

Dans certaines applications, il est nécessaire de pouvoir effectuer un test de traction visant à caractériser la résistance d'un assemblage de deux éléments collés selon un plan de collage. C'est ainsi par exemple que la norme US MIL-STD 883 E définit les règles à mettre en oeuvre pour effectuer un tel test, généralement dénommé "STUD PULL TEST", pour vérifier le collage d'un substrat en matériau semi-conducteur sur une embase.

US-5.313.841 décrit un outillage permettant d'effectuer un tel test comprenant, pour chaque élément (substrat et embase), un mécanisme d'assemblage de cet élément à l'un des deux organes de la machine de test de traction. Chaque mécanisme d'assemblage comporte un bloc ayant une face collée à la face libre de l'élément avant le montage sur la machine de traction, et une extrémité de connexion introduite entre les bras d'une chape et reliée par une liaison pivot démontable à cette chape qui, elle-même, est reliée à l'un des organes de traction de la machine de test de traction.

Ce document indique que l'un des problèmes principaux que l'on rencontre pour pouvoir effectuer ces tests, est celui de la précision de l'alignement des blocs axialement entre eux et perpendiculairement au plan de collage des éléments, lors de l'assemblage par collage de ces blocs sur les éléments avant le montage sur la machine. En effet, si ces alignements ne sont pas parfaits, le test effectué ensuite n'est pas un véritable test de traction, mais un test de pelage. US-5.313.841 préconise ainsi l'utilisation d'un dispositif d'assemblage particulier visant à améliorer la précision du collage de chaque bloc à l'élément correspondant (substrat ou embase).

Néanmoins, malgré l'utilisation d'un dispositif d'assemblage pour le collage des blocs, on ne peut pas toujours obtenir un positionnement toujours parfait des blocs. Ainsi, il arrive que le test de traction ne puisse pas être conduit dans des conditions normales, la force de rupture obtenue étant beaucoup plus faible que celle escomptée. Ce problème se pose de façon accrue lorsque les éléments présentent certaines formes et/ou dimensions particulièrement défavorables, notamment lorsqu'ils sont allongés selon une direction orthogonale à l'axe de traction.

L'invention vise donc à pallier ces inconvénients en proposant un outillage qui permette d'effectuer toujours un véritable test de traction, y compris avec des éléments à tester de formes et/ou dimensions particulières défavorables, par exemple lorsque l'un au moins des éléments est allongé selon une direction longitudinale principale parallèle au plan de collage et/ou lorsque le plan de collage présente une plus grande longueur selon une telle direction longitudinale principale.

L'invention vise également à proposer un tel outillage qui soit simple à mettre en oeuvre, et qui assure la reproductibilité des résultats des essais réalisés.

Pour ce faire, l'invention concerne un outillage de montage sur une machine de test de traction ayant des organes de traction s'écartant l'un de l'autre selon un axe de traction, de deux éléments collés l'un à l'autre selon un plan de collage, chacun de ces éléments présentant une face libre plane parallèle au plan de collage, cet outillage comprenant, pour chaque élément un mécanisme d'assemblage de cet élément à l'un des deux organes de traction de la machine, ce mécanisme d'assemblage étant adapté pour que le plan de collage puisse être disposé perpendiculairement à l'axe de traction, et comprenant une première pièce adaptée pour pouvoir être collée, préalablement au montage sur la machine, sur une face libre de l'élément parallèle au plan de collage, caractérisé en ce que le mécanisme d'assemblage de l'un au moins des deux éléments est adapté pour autoriser, après le montage sur la machine, une modification de la position de ladite première pièce par rapport à l'organe de traction correspondant selon au moins une direction, dite direction d'ajustement, orthogonale à l'axe de traction.

Ainsi, contrairement à l'art antérieur dans lequel on cherchait à réaliser un assemblage aussi précis que possible avant le montage sur la machine, sans possibilité de modification ultérieure des positions relatives des blocs de l'outillage et des éléments, l'inventeur a constaté qu'il est possible et préférable de prévoir au contraire un réglage d'alignement après le montage sur la machine. La précision de l'assemblage des pièces de l'outillage aux éléments à tester a alors moins d'importance. Par contre, l'outillage selon l'invention autorise alors un alignement précis, par réglage selon la direction d'ajustement, de la position des éléments par rapport à l'axe de traction après le montage sur la machine, et donc immédiatement avant d'effectuer le test de traction.

De préférence, avantageusement et selon l'invention, chacun des deux mécanismes d'assemblage est adapté pour autoriser, après le montage sur la machine, une modification de la position de ladite première pièce par rapport à l'organe de traction correspondant selon au moins une direction d'ajustement orthogonale à l'axe de traction.

L'outillage selon l'invention est avantageusement applicable pour le montage, sur une machine de test de traction, de deux éléments collés l'un à l'autre selon un plan de collage présentant au moins une portion allongée selon au moins une même direction longitudinale principale (par exemple en forme de bande rectangulaire), notamment présentant selon cette direction, une longueur supérieure à cinq fois sa largeur, par exemple de l'ordre de dix à cinquante fois sa largeur. Dans ce cas, avantageusement et selon l'invention, l'un au moins des deux mécanismes d'assemblage est adapté pour présenter une direction d'ajustement parallèle à cette direction longitudinale principale.

Par ailleurs, avantageusement et selon l'invention, chacun des deux mécanismes d'assemblage est adapté pour présenter une seule direction d'ajustement.

En outre, avantageusement et selon l'invention, les deux mécanismes d'assemblage sont adaptés pour qu'au moins une direction d'ajustement de l'un des deux mécanismes d'assemblage soit parallèle à une direction d'ajustement de l'autre mécanisme d'assemblage. Dans le cas où le plan de collage est allongé selon la direction longitudinale principale, les directions d'ajustement des deux mécanismes d'assemblage sont parallèles à la direction longitudinale principale.

En variante ou en combinaison, avantageusement et selon l'invention, les deux mécanismes d'assemblage sont adaptés pour qu'au moins une direction d'ajustement de l'un de ces deux mécanismes d'assemblage soit au moins sensiblement perpendiculaire à une direction d'ajustement de l'autre mécanisme d'assemblage. Cette variante est avantageusement applicable lorsque le plan de collage n'est pas notablement allongé dans une direction (par exemple lorsqu'il est en forme générale de carré ou de disque).

Selon une autre caractéristique avantageuse de l'invention, l'un au moins des deux mécanismes d'assemblage -et avantageusement chacun des deux mécanismes d'assemblage qui sont semblables- comprend :
- une première pièce adaptée pour pouvoir être collée sur une face libre de l'élément correspondant parallèle au plan de collage,
- une deuxième pièce adaptée pour pouvoir être fixée axialement à l'organe de traction correspondant de la machine,
- des moyens de fixation axiale de la première pièce et de la deuxième pièce adaptés pour autoriser des déplacements relatifs de ces première et deuxième pièces en translation selon au moins une direction d'ajustement en translation parallèle au plan de collage.

Par moyens de "fixation axiale" des deux pièces, on désigne tous moyens aptes à rendre solidaires les deux pièces selon la direction axiale de traction, de sorte que les efforts de traction générés par la machine soient transmis intégralement entre ces deux pièces et à l'élément correspondant.

Lorsque les deux mécanismes d'assemblage sont semblables, l'outillage selon l'invention comprend ainsi deux paires de pièces, l'une pour l'assemblage du premier élément à un premier organe de traction de la machine, l'autre pour l'assemblage du deuxième élément au deuxième organe de traction de la machine.

Avantageusement et selon l'invention, les mécanismes d'assemblage sont adaptés pour que, après collage de chacune des premières pièces sur l'élément correspondant, les deux directions d'ajustement en translation soient parallèles entre elles.

Avantageusement et selon l'invention, les moyens de fixation axiale de la première pièce et de la deuxième pièce sont formés d'un assemblage coulissant des première et deuxième pièces l'une sur l'autre autorisant des déplacements relatifs de ces deux pièces en translation selon la direction d'ajustement en translation. Avantageusement et selon l'invention, l'assemblage coulissant est du type à queue d'aronde. Toute autre forme équivalente d'assemblage coulissant peut être utilisée. Pour réaliser une fixation axiale autorisant un ajustement en translation parallèlement au plan de collage, l'assemblage coulissant peut être formé de deux portions d'assemblage, chacune appartenant respectivement à l'une des deux pièces, en contact l'une avec l'autre selon une surface de contact qui est une surface réglée de génératrice définissant la direction d'ajustement en translation, et qui présente au moins un retour transversal d'une portion d'assemblage autour de l'autre portion d'assemblage de façon à bloquer les deux pièces perpendiculairement à la direction d'ajustement en translation, c'est-à-dire selon la direction axiale de traction. Dans le cas d'une queue d'aronde, ladite surface de contact est une surface réglée de section trapézoïdale.

En outre, avantageusement et selon l'invention, la deuxième pièce est adaptée pour pouvoir être fixée axialement à l'organe de traction correspondant de la machine par des moyens d'attache comprenant au moins une liaison pivot à axe de pivotement orthogonal à l'axe de traction, et la direction d'ajustement en translation est orthogonale à cet axe de pivotement. Avantageusement et selon l'invention, les moyens d'attache de la deuxième pièce à l'organe de traction correspondant de la machine comprennent une liaison rotule. Lesdits moyens d'attache sont aussi adaptés pour fixer axialement la deuxième pièce à l'organe de traction.

Il est à noter que la deuxième pièce est reliée d'un côté à un organe de traction, et de l'autre à la première pièce. Cette deuxième pièce n'a donc pas à être modifiée selon les formes et/ou les dimensions de l'élément qu'elle permet d'assembler. A l'inverse, la première pièce est adaptée selon les formes et/ou les dimensions de la face libre plane de l'élément à laquelle est destinée à être collée. La première pièce présente donc une face de collage plane adaptée pour pouvoir être placée au contact de la face libre plane de l'élément et y être collée. Cette face de collage présente une aire qui est supérieure ou égale à soixante pour cent de l'aire du plan de collage, et qui peut être, avantageusement, supérieure à l'aire du plan de collage.

L'invention est plus particulièrement et avantageusement applicable pour le cas où les éléments sont formés d'un substrat tel qu'une puce en matériau semi-conducteur (circuit intégré), de forme allongée selon une direction longitudinale -notamment de longueur comprise entre 1 cm et 20 cm pour une largeur comprise entre 0,5 mm et 5 cm- collé sur une embase de forme également allongée selon la direction longitudinale. L'outillage est alors caractérisé en ce que les deux mécanismes d'assemblage présentent une direction d'ajustement parallèle à la direction longitudinale du substrat.

L'invention concerne aussi un outillage caractérisé en combinaison par tout ou partie des caractéristiques mentionnées ci-dessus ou ci-après.

D'autres buts, caractéristiques et avantages de l'invention apparaîtront à la lecture de la description suivante qui se réfère aux figures annexées dans lesquelles :

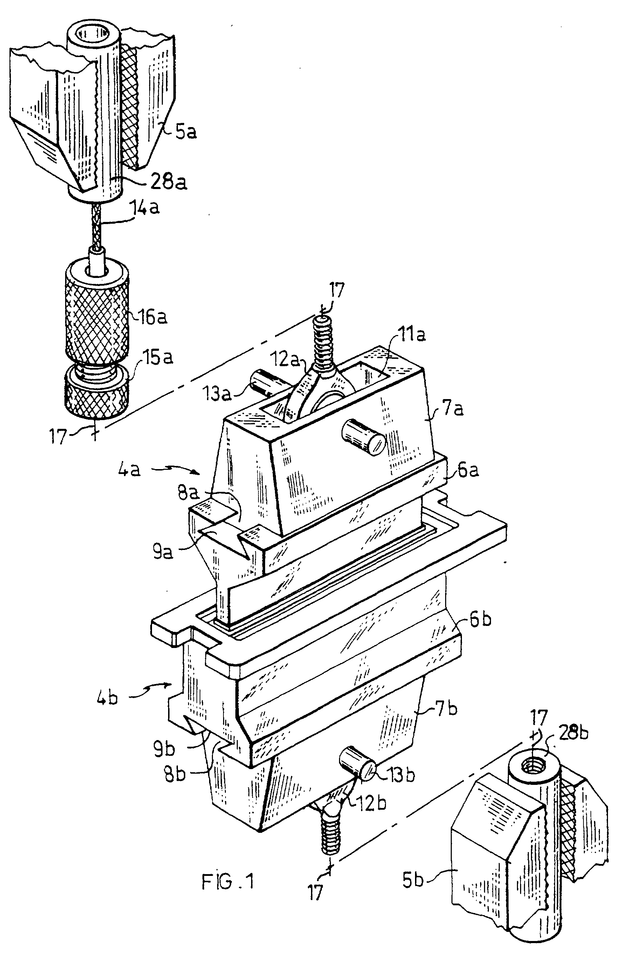

- la figure 1 est une vue schématique en perspective d'un outillage selon l'invention, pour le montage d'une puce allongée de matériau semi-conducteur collée sur une embase,

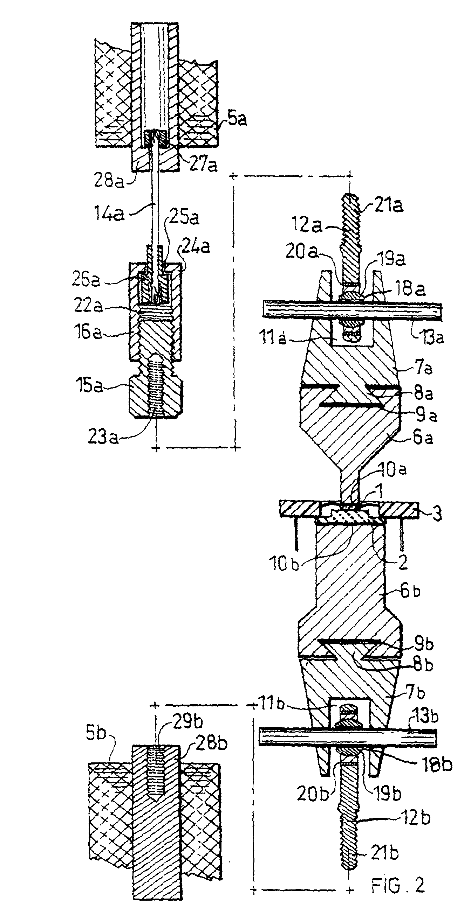

- la figure 2 est une vue schématique en coupe axiale perpendiculairement à la direction longitudinale de la puce, de l'outillage de la figure 1,

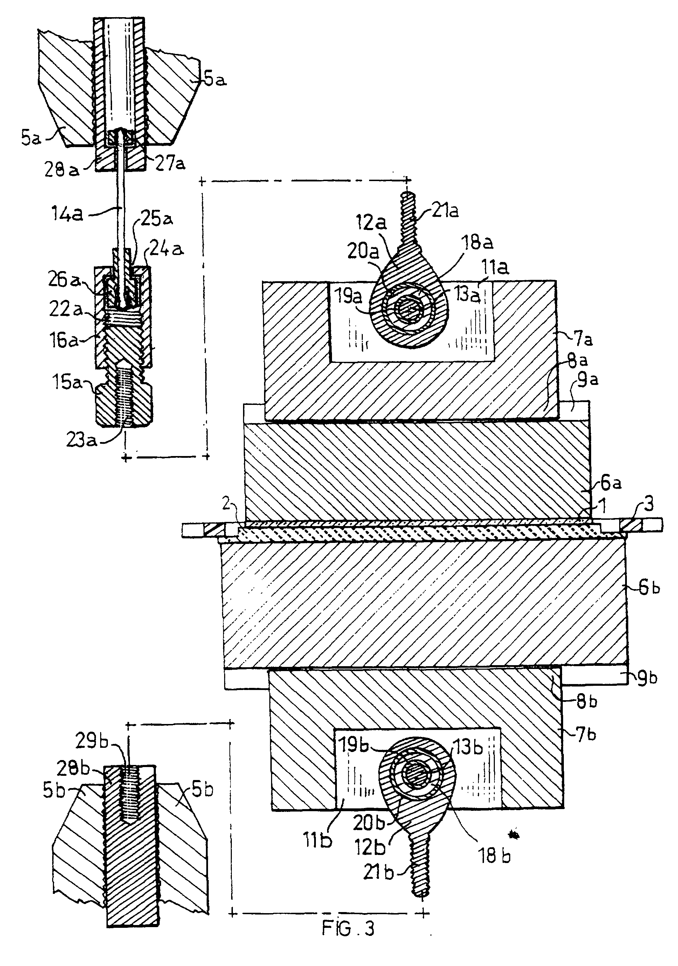

- la figure 3 est une vue schématique en coupe axiale parallèlement à la direction longitudinale de la puce, de l'outillage de la figure 1.

L'outillage selon l'invention représenté sur les figures permet de faire subir un test de traction perpendiculairement au plan de collage d'un substrat 1 tel qu'une puce de matériau semi-conducteur, de forme allongée, collé sur une embase 2, l'ensemble étant associé à un boîtier 3, de façon conventionnelle. En effet, les substrats ou puces électroniques de matériau semi-conducteur (circuit intégré) sont parfois incorporés dans des systèmes dans lesquels il est nécessaire d'assurer l'excellente tenue mécanique du substrat par rapport à son embase. Tel est en particulier le cas des systèmes spatiaux, par exemple pour les puces constituant des barrettes faisant office de capteur d'images. Dans ces applications, la tenue mécanique de la puce est assurée par collage de celle-ci sur son embase selon un plan de collage qui correspond à la face de contact de la puce avec son embase. Le plan de collage est de forme globalement rectangulaire très allongée. Classiquement, le plan de collage est allongé selon une direction longitudinale principale d'une longueur qui est de l'ordre de 1 à 20 cm -notamment comprise en général entre 5 cm et 15 cm- pour une largeur comprise entre 0,5 mm et 5 cm -notamment en général comprise entre 1 et 5 mm-. Le substrat ou puce 1 et l'embase 2 sont deux éléments 1, 2 collés l'un à l'autre selon un plan de collage, et présentent chacun une face libre parallèle au plan de collage.

L'outillage selon l'invention comprend un premier mécanisme d'assemblage 4a de la puce 1 à l'un 5a des organes de traction de la machine, et un deuxième mécanisme d'assemblage 4b de l'embase 2 à l'autre 5b organe de traction de la machine. Dans tout le texte, l'indice "a" désigne des organes constitutifs du premier mécanisme d'assemblage 4a de la puce 1 au premier organe de traction 5a, et l'indice "b" désigne les organes similaires du deuxième mécanisme d'assemblage 4b de l'embase 2 au deuxième organe de traction 5b. Les organes de traction 5a, 5b peuvent être par exemple des mandrins ou mors de la machine. Ils définissent un axe de traction 17 représenté par des lignes brisées sur les figures à des fins d'illustration. Lors du test, les deux organes de traction 5a, 5b sont éloignés l'une de l'autre en translation selon cet axe de traction 17.

Les deux mécanismes d'assemblage 4a, 4b sont semblables et chacun d'eux comprend une première pièce 6a, 6b adaptée pour pouvoir être collée sur une face libre de la puce 1 ou, respectivement, de l'embase 2, qui est parallèle au plan de collage de la puce 1 sur l'embase 2, et une deuxième pièce 7a, 7b qui est adaptée pour pouvoir être connectée d'un côté à la première pièce 6a, 6b, et de l'autre à l'organe de traction 5a, 5b correspondant de la machine. Chaque mécanisme d'assemblage 4a, 4b comprend en outre des moyens 8a, 8b, 9a, 9b de fixation axiale de la première pièce 6a, 6b et de la deuxième pièce 7a, 7b, de sorte que ces deux pièces 6a, 6b, 7a, 7b sont solidaires axialement l'un de l'autre selon la direction axiale de traction, les efforts de traction étant transmis à partir de chaque organe de traction 5a, 5b jusqu'à la puce 1, ou respectivement, l'embase 2, par la paire de pièces 6a, 6b, 7a, 7b.

Les moyens 8a, 8b, 9a, 9b de fixation axiale de ces deux pièces sont adaptés pour autoriser des déplacements relatifs de la première pièce 6a, 6b et de la deuxième pièce 7a, 7b l'une par rapport à l'autre en translation selon au moins une direction d'ajustement en translation qui est parallèle au plan de collage de la puce 1 sur l'embase 2. Pour ce faire, la première pièce 6a, 6b comprend une rainure en queue d'aronde 8a, 8b adaptée pour pouvoir être engagée et coulisser dans une gorge 9a, 9b en queue d'aronde de la deuxième pièce 7a, 7b. Ainsi, les moyens de fixation sont formés d'un assemblage coulissant du type à queue d'aronde, la première pièce 6a, 6b et la deuxième pièce 7a, 7b pouvant coulisser l'une par rapport à l'autre selon une direction d'ajustement en translation. Comme on le voit, la direction d'ajustement autorisée par l'assemblage coulissant à queue d'aronde 8a, 9a du premier mécanisme d'assemblage 4a est parallèle à la direction d'ajustement autorisée par l'assemblage coulissant à queue d'aronde 8b, 9b du deuxième mécanisme d'assemblage 4b, et ces directions d'ajustement sont parallèles à la direction longitudinale principale de la puce 1 et de l'embase 2.

La première pièce 6a, 6b présente une face rectangulaire 10a, respectivement 10b de collage sur la puce 1 ou, respectivement, sur l'embase 2, et cette face de collage 10a, 10b a des dimensions qui correspondent exactement à celles de la face libre de la puce, ou de l'embase 2, opposée et parallèle au plan de collage sur laquelle elle doit être collée.

La première pièce 6a, 6b est collée sur la puce 1 ou. respectivement, sur l'embase 2, grâce à une colle qui procure un assemblage fiable et robuste en traction. La force de ce collage doit bien évidemment être supérieure à celle du collage de la puce 1 à son embase 2. On peut utiliser une colle cyanoacrylate ou toute autre colle équivalente.

La deuxième pièce 7a, 7b présente un évidemment 11a, 11b adapté pour recevoir une pièce d'attache 12a, 12b. La deuxième pièce 7a, 7b et la pièce d'attache 12a, 12b sont percées toutes deux transversalement pour pouvoir être assemblées par une cheville transversale 13a, 13b formant une liaison pivot à axe de pivotement orthogonal à l'axe de traction 17 de la machine de test de traction. Une rotation de la deuxième pièce 7a, 7b par rapport à la pièce d'attache 12a, 12b autour de l'axe de la cheville 13a, 13b est possible.

La pièce d'attache 12a, 12b comprend un roulement 18a, 18b formant une liaison rotule, comportant une cage interne 19a, 19b percée pour recevoir la cheville 13a, 13b et de forme externe sphérique, montée librement rotative dans une cage extérieure 20a, 20b solidaire de la pièce d'attache 12a, 12b. La pièce d'attache 12a, 12b est prolongée axialement par une portion filetée 21a, 21b d'extrémité.

Avantageusement et selon l'invention, l'un au moins 4a des mécanismes d'assemblage 4a, 4b comprend, entre la deuxième pièce 7a et l'organe de traction 5a, un câble 14a souple en flexion non extensible axialement, par exemple en acier. En outre, l'un au moins 4a des mécanismes d'assemblage 4a, 4b comprend un tendeur 15a, 16a.

Dans le mode de réalisation représenté, seul l'un 4a des mécanismes d'assemblage comprend un câble 14a et un tendeur 15a, 16a. Les deux mécanismes d'assemblage 4a, 4b peuvent aussi être identiques et comprendre chacun un câble et un tendeur.

Le tendeur 15a, 16a comprend une pièce filetée 15a adaptée pour pouvoir être engagée dans un taraudage 22a d'une pièce taraudée 16a. La pièce filetée 15a comprend un taraudage 23a recevant la portion filetée 21a terminale de la pièce d'attache 12a. La pièce taraudée 16a présente un fond 24a percé d'un orifice 25a pour le passage du câbie 14a, dont une extrémité porte un arrêt 26a venant en butée axialement contre le fond 24a. L'autre extrémité du câble 14a porte un arrêt 27a ou un serre-câble de fixation axiale à un cylindre 28a serré dans les mors 5a de la machine de traction.

Lorsque l'on tourne la pièce filetée 15a par rapport à la pièce taraudée 16a, on tend ou détend le câble 14a.

L'autre mécanisme d'assemblage 14b comprend aussi une pièce d'attache 12b associée à la deuxième pièce 7b par la cheville 13b et le roulement 18b formant une liaison rotule. La portion filetée 21b d'extrérnité de la pièce d'attache est engagée dans un taraudage 29b d'un cylindre 28b serré dans les mors 5b de la machine de traction. En variante non représentée, la pièce d'attache 12b peut comporter une extension cylindrique directement serrée dans les mors 5b.

Pour installer l'outillage selon l'invention dans une machine de test de traction, on procède de la façon suivante. Tout d'abord, on colle la première pièce 6b sur la face libre de l'embase 2, puis la première pièce 6a sur la face libre de la puce ou substrat 1. On assemble les pièces d'attache 12a, 12b à chacun des organes de traction 5a, 5b correspondant (mors) par l'intermédiaire du (des) câble(s) 14a et du (des) tendeur(s) selon le cas, et on serre les mors 5a, 5b sur les cylindres 28a, 28b. On assemble ensuite les deuxièmes pièces 7a, 7b respectivement aux premières pièces 6a, 6b collées à la puce 1 et respectivement, à l'embase 2, en engageant les rainures 8a, 8b des queues d'arondes dans les gorges 9a, 9b correspondantes. On assemble ensuite les deuxièmes pièces 7a, 7b aux pièces d'attaches 12a, 12b grâce aux chevilles 13a, 13b, l'une après l'autre le(s) câble(s) 14a étant préalablement détendu(s). On tend le(s) câble(s) 14a en agissant sur le(s) tendeur(s) 15a, 16a. On fait coulisser chaque rainure 8a, 8b dans chaque gorge 9a, 9b de telle sorte que les deux mécanismes d'assemblage 4a, 4b ainsi constitués soient parfaitement alignés selon la direction axiale (axe de traction 17) des organes de traction 5a, 5b. On peut alors effectuer le test de traction proprement dit dans des conditions optimales.

Les essais effectués ont démontré que des efforts de plus de 300 kgf(2 943 N) ont pu être appliqués pour décoller, selon leur plan de collage, des puces de 8 cm de longueur et 2 mm de largeur.

## Revendications

1. Outillage de montage sur une machine de test de traction ayant des organes de traction (5a, 5b) s'écartant l'un de l'autre selon un axe de traction (17), de deux éléments (1, 2) collés l'un à l'autre selon un plan de collage, chacun de ces éléments présentant une face libre plane parallèle au plan de collage, cet outillage comprenant, pour chaque élément (1, 2), un mécanisme d'assemblage (4a, 4b) de cet élément (1, 2) à l'un des deux organes de traction (5a, 5b) de la machine, ce mécanisme d'assemblage (4a, 4b) étant adapté pour que le plan de collage puisse être disposé perpendiculairement à l'axe de traction (17), et comprenant une première pièce (6a, 6b) adaptée pour pouvoir être collée, préalablement au montage sur la machine, sur une face libre de l'élément (1, 2) parallèle au plan de collage, **caractérisé en ce que** le mécanisme d'assemblage (4a, 4b) de l'un au moins des deux éléments (1, 2) est adapté pour autoriser, après le montage sur la machine, une modification de la position de ladite première pièce (6a, 6b) par rapport à l'organe de traction (5a, 5b) correspondant selon au moins une direction, dite direction d'ajustement, orthogonale à l'axe de traction (17).

2. Outillage selon la revendication 1, **caractérisé en ce que** chacun des deux mécanismes d'assemblage (4a, 4b) est adapté pour autoriser, après le montage sur la machine, une modification de la position de ladite première pièce (6a, 6b) par rapport à l'organe de traction (5a, 5b) correspondant selon au moins une direction d'ajustement orthogonale à l'axe de traction (17).

3. Outillage selon l'une des revendications 1 et 2, **caractérisé en ce que** le plan de collage étant allongé selon au moins une direction longitudinale principale, l'un au moins des deux mécanismes d'assemblage (4a, 4b) est adapté pour présenter une direction d'ajustement parallèle à cette direction longitudinale principale.

4. Outillage selon l'une des revendications 1 à 3, **caractérisé en ce que** chacun des deux mécanismes d'assemblage (4a, 4b) est adapté pour présenter une seule direction d'ajustement.

5. Outillage selon l'une des revendications 1 à 4, **caractérisé en ce que** les deux mécanismes d'assemblage (4a, 4b) sont adaptés pour qu'au moins une direction d'ajustement de l'un de ces mécanismes d'assemblage (4a, 4b) soit parallèle à une direction d'ajustement de l'autre mécanisme d'assemblage.

6. Outillage selon l'une des revendications 1 à 5, **caractérisé en ce que** les deux mécanismes d'assemblage (4a, 4b) sont adaptés pour qu'au moins une direction d'ajustement de l'un (4a, 4b) de ces mécanismes d'assemblage soit au moins sensiblement perpendiculaire à une direction d'ajustement de l'autre mécanisme d'assemblage (4b, 4a).

7. Outillage selon l'une des revendications 1 à 6, **caractérisé en ce que** l'un au moins des deux mécanismes d'assemblage (4a, 4b) comprend :
- une première pièce (6a, 6b) adaptée pour pouvoir être collée sur une face libre de l'élément (1, 2) correspondant parallèle au plan de collage,
- une deuxième pièce (7a, 7b) adaptée pour pouvoir être fixée axialement à l'organe de traction (5a, 5b) correspondant de la machine,
- des moyens (8a, 8b, 9a, 9b) de fixation axiale de la première pièce (6a, 6b) et de la deuxième pièce (7a, 7b) adaptés pour autoriser des déplacements relatifs de ces première et deuxième pièces en translation selon au moins une direction d'ajustement en translation parallèle au plan de collage.

8. Outillage selon la revendication 7, **caractérisé en ce que** les deux mécanismes d'assemblage (4a, 4b) comprennent chacun :
- une première pièce (6a, 6b) adaptée pour pouvoir être collée sur une face libre de l'élément (1, 2) correspondant parallèle au plan de collage,
- une deuxième pièce (7a, 7b) adaptée pour pouvoir être fixée axialement à l'organe de traction (5a, 5b) correspondant de la machine,
- des moyens (8a, 8b, 9a, 9b) de fixation axiale de la première pièce (6a, 6b) et de la deuxième pièce (7a, 7b) adaptés pour autoriser des déplacements relatifs de ces première et deuxième pièces en translation selon au moins une direction d'ajustement en translation parallèle au plan de collage.

9. Outillage selon la revendication 8, **caractérisé en ce que** les mécanismes d'assemblage (4a, 4b) sont adaptés pour que, après collage de chacune des premières pièces (6a, 6b) sur l'élément (1, 2) correspondant, les deux directions d'ajustement en translation soient parallèles.

10. Outillage selon l'une des revendications 7 à 9, **caractérisé en ce que** les moyens (8a, 8b, 9a, 9b) de fixation axiale de la première pièce (6a, 6b) et de la deuxième pièce (7a, 7b) sont formés d'un assemblage coulissant des première et deuxième pièces l'une sur l'autre autorisant des déplacements relatifs de ces deux pièces (6a, 6b, 7a, 7b) en translation selon la direction d'ajustement en translation.

11. Outillage selon la revendication 10, **caractérisé en ce que** l'assemblage coulissant est du type à queue d'aronde.

12. Outillage selon l'une des revendications 7 à 11, **caractérisé en ce que** la deuxième pièce (7a, 7b) est adaptée pour pouvoir être fixée axialement à l'organe de traction (5a, 5b) correspondant de la machine par des moyens (12a, 12b) d'attache comprenant au moins une liaison pivot (13a, 13b) à axe de pivotement orthogonal à l'axe de traction, et **en ce que** la direction d'ajustement en translation est orthogonale à cet axe de pivotement.

13. Outillage selon la revendication 12, **caractérisé en ce que** les moyens (12a, 12b) d'attache de la deuxième pièce à l'organe de traction (5a, 5b) correspondant de la machine comprennent une liaison rotule (18a, 18b).

14. Outillage selon l'une des revendications 1 à 13, **caractérisé en ce que** les éléments (1, 2) étant formés d'un substrat (1) en matériau semi-conducteur, de forme allongée selon une direction longitudinale, collé sur une embase (2) de forme également allongée selon la direction longitudinale, les deux mécanismes d'assemblage (4a, 4b) présentent une direction d'ajustement parallèle à la direction longitudinale du substrat (1).

## Claims

1. A tooling to be fitted onto a machine for traction testing, with traction units (5a, 5b) which are moved apart from one another according to a traction axis (17), of two elements (1, 2) which are glued to one another according to a gluing plane, each of these elements having a flat free surface which is parallel to the gluing plane, this tooling comprising, for each element (1, 2), a mechanism (4a, 4b) for assembly of this element (1, 2) to one of the two traction units (5a, 5b) of the machine, this mechanism for assembly (4a, 4b) being designed such that the gluing plane can be disposed perpendicularly to the traction axis (17), and comprising a first part (6a, 6b), which is designed to be able to be glued, before fitting onto the machine takes place, onto a free surface of the element (1, 2), parallel to the gluing plane, wherein the mechanism (4a, 4b) for assembly of at least one of the two elements (1, 2) is designed, after fitting onto the machine has taken place, to permit modification of the position of the said first part (6a, 6b) relative to the corresponding traction unit (5a, 5b), according to at least one direction, the so-called direction of adjustment, at rightangles to the traction axis (17).

2. A tooling as claimed in claim 1, wherein each of the two mechanisms (4a, 4b) for assembly is designed, after fitting onto the machine has taken place, to permit modification of the position of the said first part (6a, 6b) relative to the traction unit (5a, 5b), corresponding to at least one direction of adjustment at right-angles to the traction axis (17).

3. A tooling as claimed in claim 1 or claim 2, wherein, since the gluing plane is elongate according to at least one main longitudinal direction, at least one of the two mechanisms (4a, 4b) for assembly is designed to have a direction of adjustment parallel to this main longitudinal direction.

4. A tooling as claimed in any one of claims 1 to. 3, wherein each of the two mechanisms (4a, 4b) for assembly is designed to have a single direction of adjustment.

5. A tooling as claimed in any one of claims 1 to 4, wherein the two mechanisms (4a,. 4b) for assembly are designed such that at least one direction of adjustment of one of these mechanisms (4a, 4b) for assembly is parallel to a direction of adjustment of the other mechanism for assembly.

6. A tooling as claimed in any one of claims 1 to 5, wherein the two mechanisms (4a, 4b) for assembly are designed such that at least one direction of adjustment of one of these mechanisms (4a, 4b) for assembly is at least substantially perpendicular to a direction of adjustment of the other mechanism (4b, 4a) for assembly.

7. A tooling as claimed in any one of claims 1 to 6, wherein at least one of the two mechanisms for assembly (4a, 4b) comprises:
- a first part (6a, 6b), which is designed to be able to be glued onto a free surface of the corresponding element (1, 2), parallel to the gluing plane;
- a second part (7a, 7b), which is designed to be able to be secured axially to the corresponding traction unit (5a, 5b) of-the machine; and
- means (8a, 8b, 9a, 9b) for axial securing of the first part (6a, 6b) and of the second part (7a, 7b), which are designed to permit relative displacements of these first and second parts in translation, according to at least one direction of adjustment in translation, parallel to the gluing plane.

8. A tooling as claimed in claim 7, wherein the two mechanisms for assembly (4a, 4b) each comprise:
- a first part (6a, 6b), which is designed to be able to be glued onto a free surface of the corresponding element (1, 2), parallel to the gluing plane;
- a second part (7a, 7b), which is designed to be able to be secured axially to the corresponding traction unit (5a, 5b) of the machine ; and
- means (8a, 8b, 9a, 9b) for axial securing of the first part (6a, 6b) and of the second part (7a, 7b), which are designed to permit relative displacements of these first and second parts in translation, according to at least one direction of adjustment in translation, parallel to the gluing plane.

9. A tooling as claimed in claim 8, wherein the mechanisms for assembly (4a, 4b) are designed such that, after each of the first parts (6a, 6b) has been glued onto the corresponding element (1, 2), the two directions of adjustment in translation are parallel.

10. A tooling as claimed in any one of claims 7 to 9, wherein the means (8a, 8b, 9a, 9b) for axial securing of the first part (6a, 6b) and of the second part (7a, 7b) are formed by a sliding assembly of the first and the second parts, one on the other, thus permitting relative displacements of these two parts (6a, 6b, 7a, 7b) in translation according to the direction of adjustment in translation.

11. A tooling as claimed in claim 10, wherein the sliding assembly is of the dovetail type.

12. A tooling as claimed in any one of claims 7 to 11, wherein the second part (7a; 7b) is designed to be able to be secured axially to the corresponding traction unit (5a, 5b) of the machine, by means (12a, 12b) for attachment which comprise at least one pivot connection (13a, 13b), with a swivel pin which is at right-angles to the traction axis, and the direction of adjustment in translation is at right-angles to this swivel pin.

13. A tooling as claimed in claim 12, wherein the means (12a, 12b) for attachment of the second part to the corresponding traction unit (5a, 5b) of the machine comprise a ball connection (18a, 18b).

14. A tooling as claimed in any one of claims 1 to 13, wherein, since the elements (1, 2) are formed from a substrate (1) made of semiconductor material, with a shape which is elongate according to a longitudinal direction, glued onto a base (2) which also has an elongate shape according to the longitudinal direction, the two mechanisms (4a, 4b) for assembly have a direction of adjustment parallel to the longitudinal direction of the substrate (1).

## Patentansprüche

1. Halterung auf einer Zugfestigkeitsprüfmaschine mit zwei Zugorganen (5a, 5b), die auf einer Zugachse (17) voneinander beabstandet sind, für zwei Elemente (1, 2), die auf einer Klebebene aneinander geklebt sind, wobei jedes dieser Elemente eine freie ebene Fläche besitzt, die zu der Klebebene parallel ist, wobei die Halterung für jedes Element (1, 2) einen Mechanismus (4a, 4b) zum Aneinanderfügen dieses Elementes (1, 2) an eines der beiden Zugorgane (5a, 5b) der Maschine umfasst, wobei dieser Aneinanderfügungsmechanismus (4a, 4b) so gestaltet ist, dass die Klebebene lotrecht zur Zugachse (17) angeordnet werden kann, und umfassend ein erstes Teil (6a, 6b), das so gestaltet ist, dass es vor der Montage auf der Maschine auf eine freie Fläche des Elementes (1, 2) parallel zur Klebebene geklebt werden kann, **dadurch gekennzeichnet, dass** der Aneinanderfügungsmechanismus (4a, 4b) von wenigstens einem der beiden Elemente (1, 2) so gestaltet ist; dass er nach der Montage auf der Maschine eine Veränderung der Position des genannten ersten Teils (6a, 6b) in Bezug auf das Zugorgan (5a, 5b) entsprechend wenigstens einer Richtung, Einstellrichtung genannt, orthogonal zur Zugachse (17) zulässt.

2. Halterung nach Anspruch 1, **dadurch gekennzeichnet, dass** jeder der beiden Aneinanderfügungsmechanismen (4a, 4b) so gestaltet ist, dass er nach der Montage auf der Maschine eine Veränderung der Position des genannten ersten Teils (6a, 6b) in Bezug auf das Zugorgan (5a, 5b) entsprechend wenigstens einer Einstellrichtung orthogonal zur Zugachse (17) zulässt.

3. Halterung nach einem der Ansprüche 1 und 2, **dadurch gekennzeichnet, dass**, da die Klebebene in wenigstens einer Hauptlängsrichtung verläuft, wenigstens einer der beiden Aneinanderfügungsmechanismen (4a, 4b) so gestaltet ist, dass er wenigstens eine Einstellrichtung hat, die parallel zu dieser Hauptlängsrichtung ist.

4. Halterung nach einem der Ansprüche 1 bis 3, **dadurch gekennzeichnet, dass** jeder der beiden Aneinanderfügungsmechanismen (4a, 4b) so gestaltet ist, dass er eine einzige Einstellrichtung hat.

5. Halterung nach einem der Ansprüche 1 bis 4, **dadurch gekennzeichnet, dass** die beiden Aneinanderfügungsmechanismen (4a, 4b) so gestaltet sind, dass wenigstens eine Einstellrichtung eines dieser Aneinanderfügungsmechanismen (4a, 4b) parallel zu einer Einstellrichtung des anderen Aneinanderfügungsmechanismus ist.

6. Halterung nach einem der Ansprüche 1 bis 5, **dadurch gekennzeichnet, dass** die beiden Aneinanderfügungsmechanismen (4a, 4b) so gestaltet sind, dass wenigstens eine Einstellrichtung eines dieser Aneinanderfügungsmechanismen (4a, 4b) wenigstens im Wesentlichen lotrecht zu einer Einstellrichtung des anderen Aneinanderfügungsmechanismus (4a, 4b) ist.

7. Halterung nach einem der Ansprüche 1 bis 6, **dadurch gekennzeichnet, dass** wenigstens einer der beiden Aneinanderfügungsmechanismen (4a, 4b) folgendes umfasst:
- ein erstes Teil (6a, 6b), das so gestaltet ist, dass es auf eine freie Fläche des entsprechenden Elementes (1, 2) parallel zur Klebebene geklebt werden kann,
- ein zweites Teil (7a, 7b), das so gestaltet ist, dass es axial zum Zugorgan (5a, 5b) entsprechend der Maschine befestigt werden kann,
- Mittel (8a, 8b, 9a, 9b) zum axialen Befestigen des ersten Teils (6a, 6b) und des zweiten Teils (7a, 7b), die so gestaltet sind, dass sie relative Translationsverschiebungen des ersten und des zweiten Teils in wenigstens einer Translationseinstellrichtung parallel zur Klebebene zulassen.

8. Halterung nach Anspruch 7, **dadurch gekennzeichnet, dass** die beiden Aneinanderfügungsmechanismen (4a, 4b) jeweils folgendes umfassen:
- ein erstes Teil (6a, 6b), das so gestaltet ist, dass es auf eine freie Fläche des entsprechenden Elementes (1, 2) parallel zur Klebebene geklebt werden kann,
- ein zweites Teil (7a, 7b), das so gestaltet ist, dass es axial zum Zugorgan (5a, 5b) entsprechend der Maschine befestigt werden kann,
- Mittel (8a, 8b, 9a, 9b) zum axialen Befestigen des ersten Teils (6a, 6b) und des zweiten Teils (7a, 7b), die so gestaltet sind, dass sie relative Translationsverschiebungen des ersten und des zweiten Teils in wenigstens einer Translationseinstellrichtung parallel zur Klebebene zulassen.

9. Halterung nach Anspruch 8, **dadurch gekennzeichnet, dass** die Aneinanderfügungsmechanismen (4a, 4b) so gestaltet sind, dass nach dem Kleben der einzelnen ersten Teile (6a, 6b) auf das entsprechende Element (1, 2) die beiden Translationseinstellrichtungen parallel sind.

10. Halterung nach einem der Ansprüche 7 bis 9, **dadurch gekennzeichnet, dass** die Mittel (8a, 8b, 9a, 9b) zum axialen Befestigen des ersten Teils (6a, 6b) und des zweiten Teils (7a, 7b) aus einer aneinander verschiebbaren Baugruppe aus dem ersten und dem zweiten Teil gebildet sind, die relative Translationsverschiebungen dieser beiden Teile (6a, 6b, 7a, 7b) in der Translationseinstellrichtung zulassen.

11. Halterung nach Anspruch 10, **dadurch gekennzeichnet, dass** die verschiebbare Baugruppe vom Schwalbenschwanztyp ist.

12. Halterung nach einem der Ansprüche 7 bis 11, **dadurch gekennzeichnet, dass** das zweite Teil (7a, 7b) so gestaltet ist, dass es mit Verbindungsmitteln (12a, 12b), die wenigstens einen Verbindungsdrehpunkt (13a, 13b) mit der Rotationsachse orthogonal zur Zugachse umfassen, axial am Zugorgan (5a, 5b) entsprechend der Maschine befestigt werden kann, und dadurch, dass die Translationseinstellrichtung orthogonal zu dieser Schwenkachse ist.

13. Halterung nach Anspruch 12, **dadurch gekennzeichnet, dass** die Mittel (12a, 12b) zum Verbinden des zweiten Teils mit dem Zugorgan (5a, 5b) entsprechend der Maschine ein Kugelgelenk (18a, 18b) umfassen.

14. Halterung nach einem der Ansprüche 1 bis 13, **dadurch gekennzeichnet, dass**, da die Elemente (1, 2) aus einem Substrat (1) aus einem Halbleitermaterial gebildet sind, das in einer Längsrichtung verläuft und auf eine ebenfalls in Längsrichtung verlaufende Sitzfläche (2) geklebt ist, die beiden Aneinanderfügungsmechanismen (4a, 4b) eine Einstellrichtung parallel zur Längsrichtung des Substrats (1) haben.
